Europäisches Patentamt

European Patent Office

Office européen des brevets

(19)

(11) Numéro de publication: **0 260 165 B1**

(12)

# FASCICULE DE BREVET EUROPEEN

(45) Date de publication du fascicule du brevet:
21.03.90

(51) Int. Cl.⁴: **G01V 1/22**, G08C 23/00

(21) Numéro de dépôt: 87401813.8

(22) Date de dépôt: 05.08.87

(54) Procédé et dispositif d'initialisation d'appareils d'acquisition de données et notamment de données sismiques.

(30) Priorité: 18.08.86 FR 8611876

(43) Date de publication de la demande:
16.03.88 Bulletin 88/11

(45) Mention de la délivrance du brevet:
21.03.90 Bulletin 90/12

(84) Etats contractants désignés:
BE DE GB IT NL

(56) Documents cités:
FR-A- 2 496 257
FR-A- 2 538 561
GB-A- 2 105 079
US-A- 4 119 948

(73) Titulaire: **INSTITUT FRANCAIS DU PETROLE, 4, Avenue de Bois-Préau, F-92502 Ruell-Malmaison(FR)**

(72) Inventeur: **Thierry, Gérard, 7, avenue de la Grande Armée, F-75016 Paris(FR)**
Inventeur: **Rialan, Joseph, 15, rue des Bigots, F-92190 Meudon(FR)**

(74) Mandataire: **Aubel, Pierre et al, Institut Français du Pétrole Département Brevets 4, avenue de Bois Préau, F-92502 Ruell-Malmaison(FR)**

ACTORUM AG

## Description

L'invention concerne un procédé d'initialisation d'appareils d'acquisition de données, notamment de données sismiques, et un dispositif pour sa mise en oeuvre.

Le procédé et le dispositif selon l'invention s'appliquent en particulier à l'initialisation d'appareils d'acquisition sismiques tels qu'ils sont utilisés dans les systèmes de prospection sismiques actuels. On dispose le long du profil sismique à étudier un très grand nombre de géophones ou d'hydrophones.

Ces capteurs, qui peuvent être répartis sur des longueurs de plusieurs kilomètres, sont associés à des appareils d'acquisition. Des ondes sismiques ayant été émises dans le sol, on reçoit au moyen des capteurs les ondes renvoyées par les différentes discontinuités souterraines. Les signaux captés sont collectés, numérisés et mémorisés par les appareils d'acquisition. A l'issue du cycle de réception et d'enregistrement, un laboratoire sismique centralise toutes les données en commandant séquentiellement à tous les appareils d'acquisition de lui transmettre celles qu'ils ont respectivement collectées. La transmission peut s'effectuer par un câble de transmission reliant tous les appareils d'acquisition au laboratoire sismique ou bien encore par voie hertzienne.

Un système de transmission mixte par voie hertzienne ou par câble est décrit dans les demandes de brevet français publiées n° 2.511.772 et 2.538.561, et dans la demande de brevet français EN. 86/07930 (EP-A 250 280). Il est adapté à des appareils d'acquisition agencés pour recevoir des commandes d'un système central de commande et d'enregistrement et lui transmettre des données par radio, sauf si un câble de transmission leur est connecté. Dans ce cas, les moyens d'émission-réception radio sont automatiquement mis hors circuit, les commandes et les données étant échangées par l'intermédiaire du câble de transmission. Les appareils d'acquisition et leurs moyens de transmission particuliers sont disposés dans des boîtiers étanches et éventuellement associés à des bouées, qui sont déposés sur le terrain à une certaine distance les uns des autres et reliés aux récepteurs sismiqués. Ils sont bien adaptés à la collecte des données lors d'opérations de prospection sismique effectuées dans des zones difficiles, que ce soit des zones très humides : lacs, marécages, etc, des zones dont le relief et/ou la végétation rendent problématiques les transmissions par voie hertzienne, ou des zones où la règlementation en matière de transmission par radio est très restrictive. Un ou plusieurs postes-relais disposés entre le laboratoire central et des boîtiers ou bouées inaccessibles directement peuvent être utilisés pour faciliter la centralisation des données sismiques.

Les différents boîtiers d'acquisition remplissent des fonctions très complexes, que ce soit sur le plan de l'acquisition des données sismiques que de leur transmission au laboratoire central. Les données provenant des capteurs sont d'abord amplifiées et filtrées. Puis elles sont échantillonnées et numérisées avant d'être mémorisées. Le résultat obtenu par la chaîne d'acquisition dépend de la fréquence d'échantillonnage des données, des caractéristiques des filtres électroniques passe-bas et passe-haut qu'elle comporte. Le cycle d'enregistrement étant terminé, le transfert des commandes et des données relatives à un boîtier s'effectue le plus souvent par une liaison hertzienne. La fréquence de la porteuse radio utilisée dépend de la réglenentation locale des télécommuncations et aussi de l'emplacement du boîtier dans le système de réception sismique déployé sur le terrain. Selon que le boîtier peut être atteint directement depuis le poste central de liaison hertzienne ou bien ne peut l'être que par l'intermédiaire d'un poste-relais, la fréquence de communication peut être différente.

La grande variété des conditions opératoires auxquelles doit répondre un système de réception sismique rend nécessaire l'utilisation de boîtiers d'acquisition facilement adaptables. L'introduction des conditions initiales doit pouvoir être effectuée après que les boîtiers ont été mis en place, au lieu même où ils se trouvent, dans des conditions optimales de fiabilité et de rapidité.

L'initialisation des boîtiers d'acquisition est facile en terrain sec. Un ou plusieurs opérateurs munis de boîtiers de commande, se rendent sur le terrain, au lieu même d'installation des boîtiers d'acquisition. Chacun des boîtiers est muni d'une prise facilement accessible que l'opérateur dégage pour y connecter un câble relié à sa boîte d'initialisation.

Il n'en est pas de même lorsque le système de réception et de transmission sismique est installé dans des régions difficiles. C'est notamment le cas dans des zones marécageuses ou le plus souvent on ne peut accéder aux bouées supportant les boîtiers que par bateau. La connexion effective par câble d'une boîte de commande à chaque boîtier d'acquisition est rendue plus compliquée en raison des dispositifs d'étanchéïté protégeant de l'eau les circuits électroniques et leurs zones d'accès.

La méthode selon l'invention permet d'effectuer rapidement l'initialisation de boîtiers d'acquisition adaptés chacun à collecter des signaux fournis par des capteurs, à les traiter et les enregistrer et, sur commande d'un laboratoire central, à transférer vers celui-ci les données relatives auxdits signaux, suivant une voie de transmission déterminée.

Elle est caractérisée en ce qu'elle comporte l'utilisation d'un système de transmission par rayons lumineux comportant un premier ensemble de commande mobile et une pluralité d'ensembles secondaires associés respectivement aux différents appareils d'acquisition, le déplacement du premier ensemble de commande mobile jusqu'au voisinage de chacun des appareils d'acquisition successivement et la transmission aux appareils d'acquisition, de paramètres de fonctionnement.

Le dispositif pour la mise en oeuvre du procédé comporte un premier ensemble de commande constitué d'un élément d'émission adapté à émettre des rayons infra-rouges modulés suivant des signaux d'initialisation à transmettre, un élément de réception adapté à démoduler des signaux lumineux infrarouges, un organe de traitement programmable et des circuits d'interface entre l'organe de traitement et les éléments d'émission et de réception. Il comporte aussi une pluralité d'ensembles secondaires associés respectivement aux différents boîtiers d'acquisition et constitués chacun d'un élément d'émission adapté à émettre des signaux infra-rouges modulés, d'un élément de réception des signaux d'identification provenant du premier ensemble de commande et des circuits d'interface permettant de connecter l'élément d'émission et l'élément de réception à l'organe de traitement programmable du boîtier d'acquisition correspondant.

De préférence, les éléments d'émission comportent des moyens pour engendrer un signal porteur modulé en fréquence par un second signal dont la phase est modifiée en fonction des données à transmettre et des moyens pour moduler en amplitude un faisceau lumineux infra-rouge avec le signal porteur.

La méthode selon l'invention et son dispositif de mise en oeuvre permettent de réaliser rapidement l'initialisation de boîtiers d'acquisition, quelles que soient les conditions d'utilisation, sans avoir à établir de connexion physique entre eux et le premier ensemble de commande. Les opérations d'initialisation sont simples et fiables.

Elles peuvent être réalisées par un opérateur passant à proximité (en bateau si la zone d'utilisation est immergée) et tenant à la main un boîtier d'initialisation contenant le premier ensemble de commande.

Le type de transmission choisi procure une bonne immunité aux variations de la lumière ambiante, aux bruits parasites et une très bonne sélectivité, ce qui permet d'initialiser chaque boîtier d'acquisition en particulier sans risque d'initialisations multiples.

D'autres caractéristiques et avantages de la méthode apparaîtront à la lecture de la description d'un mode préféré de réalisation, donné à titre d'exemple non limitatif et illustré par les dessins annexés où :

- la figure 1 représente un boîtier d'initialisation contenant le premier ensemble d'émission-réception d'infra-rouges.
- la figure 2 représente le schéma synoptique du premier ensemble d'émission-réception d'infra-rouges.
- la figure 3 représente le schéma synoptique d'un élément d'émission de rayons infra-rouges modulés et;
- la figure 4 représente le schéma synoptique d'un élément de réception de rayons infra-rouges modulés.

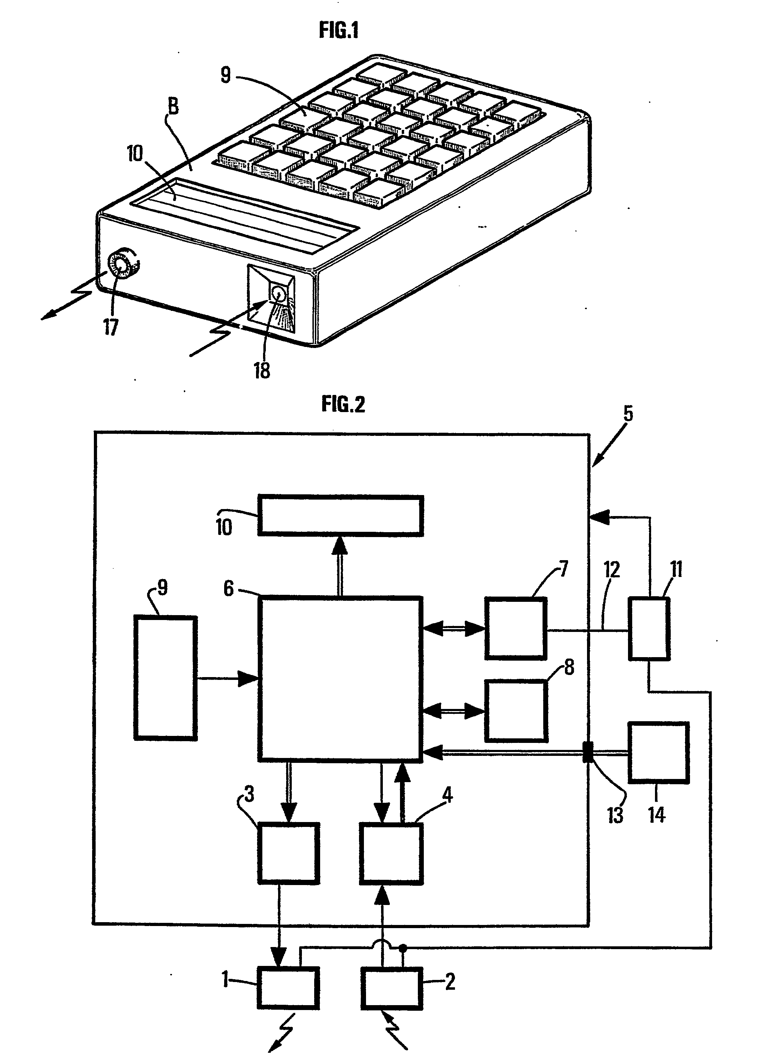

A l'intérieur du (ou de chaque) boîtier d'initialisation B (fig. 1) est disposé un premier ensemble (fig. 2) comportant un émetteur de rayons infra-rouges 1 et un récepteur de rayons infra-rouges 2 connectés, par l'intermédiaire de deux éléments d'interface respectivement 3, 4, à un micro-calculateur 5. Celui-ci comporte un micro processeur 6 communiquant avec une mémoire vive 7 du type RAM et une mémoire morte 8 du type ROM. Ces deux mémoires contiennent des programmes et des données permettant de communiquer à chaque boîtier d'acquisition des paramètres de fonctionnement. Un clavier 9 est utilisé pour déclencher différentes opérations de transmission de données ou effectuer des tests. Un élément de visualisation ou afficheur 10, permet de vérifier les ordres ou les données transmises ou reçues au cours de chaque processus d'initialisation. Une batterie 11 alimente le micro-calculateur 5 et les éléments 1 et 2 pour l'émission et la réception de rayons infra-rouges. La sauvegarde des données contenues dans la mémoire vive est assurée par une connexion permanente 12 entre celle-ci et la batterie 11.

Le micro-calculateur 5 comporte une prise 13 sur laquelle on peut connecter un câble de liaison avec un organe périphérique quelconque 14.

La transmission des signaux infra-rouges est effectuée en modulant en amplitude un faisceau d'infra-rouges par un signal de modulation. Ce signal est constitué d'une porteuse à une fréquence f1 (par exemple du 100 kHz) modulée en fréquence par une sous-porteuse à une fréquence f2 beaucoup plus basse (1 200 Hz par exemple), elle-même modulée en phase par les signaux à transmettre. Ce type de modulation présente de nombreux avantages.

La modulation par un signal porteur à fréquence bien déterminée permet d'obtenir une bonne immunité aux variations de la lumière ambiante que l'on peut observer dans les conditions normales d'utilisation. La modulation en fréquence par une sous-porteuse elle-même modulée en phase, rend les signaux transmis très peu sensibles aux signaux parasites. Aucun signal continu n'apparaissant à la détection des signaux transmis suivant ce mode, les circuits électroniques de réception sont simplifiés et l'on peut utiliser des modules électroniques à très faible consommation électrique et faible tension d'alimentation. C'est là un avantage important du fait que les boîtiers d'acquisition sont alimentés par une batterie d'accumulateurs et que l'on souhaite allonger le plus possible leur autonomie de fonctionnement.

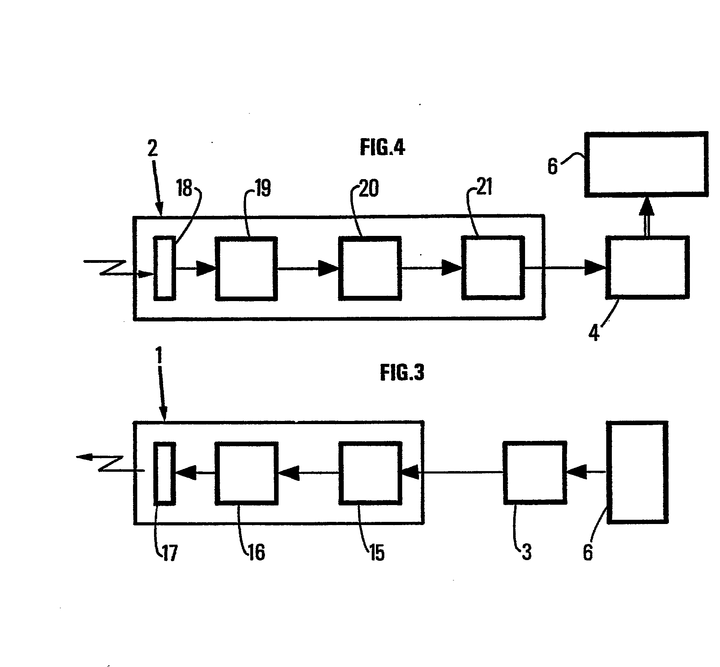

L'ensemble d'émission 1 de rayons infra-rouges comporte (fig. 3) un circuit d'entrée/sortie en série adapté à mettre sous la forme d'une séquence de bits les mots numériques traduisant les données à transmettre, fournies par le microprocesseur 6.

Chaque message numérique comporte un préambule d'identification constitué d'un ensemble de bits successifs suivi de plusieurs mots. Le début de chacun d'eux est marqué par un bit dit de départ. Chaque mot est suivi d'un bit de parité et terminé par deux bits dits d'arrêt.

Les mots numériques issus du circuit d'entrée/sortie 3 sont appliqués à un modulateur de phase 15 adapté à faire varier la phase d'un signal à la fréquence f2, en fonction du niveau logique des bits successifs. Le signal issu du modulateur de phase est ensuite appliqué à un modulateur de fréquence 16. Le signal f2 modulé en phase, module en fréquence un signal à fréquence f1. Le signal combiné issu du modulateur de fréquence 16 est alors appliqué à l'entrée de commande d'un élément d'émission 17 comportant une diode photo-émissive émettant dans l'infra-rouge.

Les signaux lumineux infra-rouges reçus traversent un filtre haute fréquence très sélectif 19 centré sur la fréquence f1, ce qui a pour effet de rejeter les signaux parasites liés notamment aux variations de la luminosité ambiante. A la sortie du filtre 19 les signaux sont appliqués à un démodulateur de fréquence 20. Le signal à la fréquence f2 issu du démodulateur de fréquence 20 est appliqué à un démodulateur de phase 21 du type séquenceur logique programmable par exemple qui détecte le mot numérique modulant. A la détection d'une partie au moins du préambule caractéristique des mots numériques transmis, le démodulateur de phase 21 envoie par l'intermédiaire du circuit d'entrée/sortie 4, un signal logique indicatif de l'arrivée d'un mot transmis au microprocesseur 6. Celui-ci en retour commande au circuit d'entrée/sortie 4 la prise en compte de ce mot et en retour il commande l'émission par l'ensemble d'émission 1, d'un mot d'acquittement et d'un mot de contrôle permettant de vérifier la nature du message transmis.

Chaque boîtier d'acquisition comporte un ensemble d'émission tel que 1 (fig. 3) et un ensemble de réception tel que 2 (fig. 4) communiquant avec le microprocesseur 6 gérant l'ensemble des tâches d'acquisition des données et de transmission de ces données au laboratoire central d'enregistrement par l'intermédiaire d'éléments d'entrée/sortie analogues aux éléments 3, 4.

Le diagramme de directivité des éléments d'émission et de réception d'infra-rouges ainsi que leur portée sont choisis de manière que les échanges de données soient sélectifs. Compte-tenu de leur éloignement le long du profil sismique où ils sont disposés, un et un seul boîtier d'acquisition peut être atteint lors d'une opération d'initialisation. Ceci simplifie les messages et leur décodage dans la mesure où aucun contrôle d'adresse n'est effectué par le boîtier d'acquisition recevant des données par voie optique.

La transmission de données entre le boîtier d'initialisation et les boîtiers d'acquisition peut porter sur des paramètres permanents et des paramètres variables.

Les premiers concernent par exemple :

- la fréquence avec laquelle les données reçues des capteurs sismiques doivent être échantillonnés;

- les fréquences d'émission à utiliser pour les transmissions par radio. Dans la demande de brevet précitée EN. 86/07930 concernant un système de transmission par radio, sont décrits des boîtiers d'acquisition comportant des générateurs de signaux dont la fréquence dépend de certains paramètres. Une liaison par rayons infra-rouges permet d'imposer ces paramètres et donc de fixer la fréquence des échanges par radio en fonction de la règlementation locale où des conditions d'exploitation dans la région explorée;

- les fréquences de filtrage dans la chaine d'acquisition sismique du boîtier d'acquisition initialisé. Les signaux sismiques captés sur le terrain sont appliqués à des filtres passe-haut et des filtres passe-bas dont les caractéristiques de filtrage peuvent être changés par un choix de paramètres appropriés.

- le numéro o'identification physique de chaque boîtier d'acquisition. Par un test, l'opérateur peut à tout instant identifier le boîtier sans avoir à l'ouvrir.

Les paramètres permanents peuvent être imposés aux boîtiers d'acquisition avant le départ de la mission sismique pour la zone à explorer, par exemple.

Sur le terrain, lorsqu'un boîtier d'acquisition est déposé, par exemple, un opérateur peut introduire des paramètres provisoires liés à son positionnement réel. Il peut s'agir de son numéro d'ordre dans l'ensemble de tous les boîtiers répartis le long du profil sismique à explorer, de ses coordonnées relatives par rapport aux autres ou de ses coordonnées absolues, de la hauteur d'eau s'il fonctionne dans une zone immergée, de signaux permettant de synchroniser l'horloge de chaque boîtier d'acquisition avec celle du boîtier d'initialisation etc. Cette liste n'est bien entendu pas limitative.

## Revendications

1. - Méthode d'initialisation d'appareils d'acquisition de données sismiques répartis le long d'un profil sismique à explorer, adaptés chacun à collecter des signaux fournis par des capteurs, à les traiter et les enregistrer et, sur commande d'un laboratoire central, à transférer vers celui-ci les données relatives auxdits signaux, suivant une voie de transmission déterminée, caractérisée en ce qu'elle comporte l'utilisation d'un système de transmission par rayons lumineux comportant un premier ensemble de commande mobile et une pluralité d'ensembles secondaires associés respectivement aux différents appareils d'acquisition, le déplacement du premier ensemble de commande mobile jusqu'au voisinage de chacun des appareils d'acquisition successivement et la transmission auxdits appareils d'acquisition, de paramètres de fonctionnement.

2. - Dispositif d'initialisation d'appareils d'acquisition de données sismiques répartis le long d'un profil sismique à explorer, adaptés chacun à collecter des signaux fournis par des capteurs, à les traiter et les enregistrer et, sur commande d'un laboratoire central, à transférer vers celui-ci les signaux collectés suivant une voie de transmission déterminée sous le contrôle d'un organe de traitement programmable, caractérisé en ce qu'il comporte un premier ensemble de commande comprenant un élément d'émission (1) adapté à émettre des rayons infra-rouges modulés par des signaux d'initialisation à transmettre, un élément de réception (2) adapté à démoduler des signaux lumineux infra-rouges et un organe de traitement programmable (5) pourvus de circuits d'interface (3, 4) entre l'organe de traitement et les éléments d'émission et de réception, et en ce qu'il comporte une pluralité d'ensembles secondaires associés respectivement aux différents appareils d'acquisition et comprenant chacun d'un élément d'émission (2) adapté à émettre des signaux infra-rouges modulés, d'un élément de réception (3) des signaux d'initialisation provenant du premier ensemble de commande et des circuits d'interface (3, 4) permettant de connecter l'élément d'émission et l'élément de réception de l'ensemble secondaire à l'organe de traitement programmable dudit appareil d'acquisition.

3. - Dispositif selon la revendication 2, caractérisé en ce que les éléments d'émission comportent des moyens pour engendrer un signal porteur modulé en fréquence par un second signal à phase variable en fonction des données à transmettre et des moyens (17) pour moduler en amplitude un faisceau lumineux infra-rouge avec le signal porteur.

4. - Dispositif selon la revendication 3, caractérisé en ce que les moyens pour engendrer ledit signal porteur comporte, connectés en série, un modulateur de phase (15) adapté à faire varier la phase d'un signal sous-porteur à une fréquence f2 en fonction des signaux à transmettre, un modulateur de fréquence (16) adapté à moduler la fréquence (f1) d'un signal porteur en fonction du signal sous-porteur.

5. - Dispositif selon la revendication 4, caractérisé en ce que le modulateur de phase (15) est connecté à l'organe de traitement (6) correspondant par l'intermédiaire d'un élément d'entrée/sortie (4) adapté à transformer des mots numériques en une séquence de bits.

6. - Dispositif selon la revendication 2, caractérisé en ce que chaque élément de réception comporte, connectés en série, des moyens (18, 19) pour recevoir les rayons infra-rouges et y détecter des signaux de modulation, un démodulateur de fréquence (20) pour détecter le signal à phase variable, un démodulateur de phase pour restituer des séquences de bits modulant la phase du second signal sous-porteur à une fréquence f2 et détecter dans ces séquences de bits le début de chacun des mots numériques transmis, le signal de détection étant transmis à l'organe de traitement correspondant.

7. - Dispositif selon la revendication 6, caractérisé en ce que le démodulateur de phase (20) est connecté à l'organe de traitement correspondant par l'intermédiaire d'un élément d'entrée/sortie (4) adapté à reconstituer les mots numériques transmis, à partir des séquences de bits reçus, sur commande de l'organe de traitement correspondant.

8. - Dispositif selon la revendication 2, caractérisé en ce que l'organe de traitement (6) du premier ensemble de commande comporte un micro-calculateur (6-8) associé à un clavier de commande (9) et un élément de visualisation (10), le micro-calculateur étant pourvu d'entrées (13) pour la connexion d'appareils périphériques.

**Claims**

1. Method for the initialisation of equipment for the acquisition of seismic data, distributed along a seismic profile to be surveyed, each unit being designed to receive the signals transmitted by sensors, to process these and record them and, when commanded by a central laboratory, to transfer to it the data relating to the said signals, in accordance with a selected transmission channel, characterised in that it consists of using a system of light transmission which comprises a first mobile control device and a number of secondary devices associated respectively with the various different data acquisition units, the first mobile control device being transported into the vicinity of each of the data acquisition units in succession and the operational parameters being transmitted to the said data acquisition units.

2. Device for the initialisation of equipment for the acquisition of seismic data, distributed along a seismic profile to be surveyed, each device being designed to receive the signals provided by sensors, to process these and record them and, when commanded by a central laboratory, to transfer to it the signals received in accordance with a selected transmission channel under the control of a programmable processing device, characterised in that it consists of a first control device comprising a transmission device (1) designed to transmit infra red light modulated by the initialisation signals to be transmitted, a receiving device (2) designed to demodulate the infra red light signals and a programmable processing device (5) provided with interface circuits (3, 4) between the processing device and the transmission and receiving devices and in that it comprises a number of secondary devices associated respectively with the several data acquisition units and each comprising a transmission device (2) designed to transmit modulated infra red signals, a receiving device (3) for the initialisation signals originating from the first control device and interface circuits (3, 4) enabling the transmission device and the receiving device for the secondary device to be connected to the programmable processing device for the said data acquisition unit.

3. Device in accordance with claim 2, characterised in that the transmission devices comprise a means for generating a carrier signal, frequency modulated by a second signal with a phase variable in accordance with the data to be transmitted and a means (17) to modulate the amplitude of an infra red light beam in accordance with the carrier signal.

4. Device in accordance with claim 3, characterised in that the means for generating the said carrier signal comprises a series connected phase modulator (15) designed to vary the phase of a sub carrier signal at a frequency f2 in accordance with the signal to be transmitted, a frequency modulator (16) designed to modulate the frequency (f1) of a carrier signal in accordance with the sub-carrier signal.

5. Device in accordance with claim 4, characterised in that the phase modulator (15) is connected to the corresponding processing device (6) by means of an input/output device (4) designed to transform digital words into a sequence of bits.

6. Device in accordance with claim 2, characterised in that each receiving device includes a means (18, 19), connected in series, of receiving the infra red light and detecting the modulation signals, a frequency demodulator (20) to detect the variable phase signal, a phase demodulator to reconstitute the sequences of bits modulating the phase of the second sub-carrier signal at a frequency f2 and detect, in these sequences of bits, the start of each of the digital words transmitted, the detection signal being transmitted to the corresponding processing device.

7. Device in accordance with claim 6, characterised in that the phase demodulator (20) is connected to the corresponding processing device by means of an input/output device (4) designed to reconstitute the digital words transmitted from the sequences of bits received, when commanded by the corresponding processing device.

8. Device in accordance with claim 2, characterised in that the processing device (6) for the first control device comprises a microprocessor (6–8) associated with a controlling key pad (9) and a display unit (10), the microprocessor being provided with inputs (13) for the connection of peripheral equipment.

**Patentansprüche**

1. Verfahren zur Einleitung von Erfassungsgeräten für seismische Daten, welche längs eines zu explorierenden seismischen Profils verteilt angeordnet und so ausgebildet sind, daß jedes von Empfängern gelieferte Signale sammelt, sie verarbeitet und sie aufzeichnet und auf Befehl eines Zentrallabors hin die diese Signale betreffenden Daten zu diesem längs eines bestimmten Übertragungswegs überführt, dadurch gekennzeichnet, daß es die Verwendung eines Übertragungssystems vermittels Lichtstrahlen umfaßt, das eine erste bewegliche Steueranordnung und eine Vielzahl von Sekundäranordnungen umfaßt, die jeweils den verschiedenen Datenerfassungsgeräten zugeordnet sind und die Bewegung der ersten beweglichen Anordnung aufeinanderfolgend bis in die Nachbarschaft jedes der Erfassungsgeräte sowie die Übertragung von Funktionsparametern an diese Erfassungsgeräte umfaßt.

2. Vorrichtung zur Einleitung von Erfassungsgeräten für seismische Daten, die längs eines zu explorierenden seismischen Profils angeordnet und so ausgebildet sind, daß jedes von Empfängern gelieferte Signale sammelt, sie verarbeitet und sie aufzeichnet und auf Steuerung durch ein Zentrallabor hin die gesammelten Signale längs eines bestimmten Übertragungswegs unter Regelung eines programmierbaren Verarbeitungsorgans gegen dieses überführt, dadurch gekennzeichnet, daß sie eine erste Steueranordnung mit einem Sendeelement (1) umfaßt, das so ausgebildet ist, daß es durch zu übertragende Einleitungssignale modulierte Infrarotstrahlen aussendet, einem Empfangselement (2), das so ausgebildet ist, daß es Infrarotlichtsignale demoduliert sowie einem programmierbaren Verarbeitungsorgan (5), versehen mit Interface-Kreisen zwischen dem Verarbeitungsorgan und den Sende- und Empfangselementen und daß, sie eine Vielzahl von Sekundäranordnungen umfaßt, die jeweils den unterschiedlichen Erfassungsgeräten zugeordnet sind und gebildet sind:

je aus einem Sendeelement (2), das so ausgelegt ist, daß es modulierte Infrarotsignale aussendet; einem Empfangselement (3) für Einleitungssignale, die aus der ersten Steueranordnung stammen; und Interface-Schaltungen (3, 4), die es ermöglichen, das Sendeelement und das Empfangselement der Sekundäranordnung mit dem programmierbaren Verarbeitungsorgan dieses Erfassungsgerätes zu verbinden.

3. Vorrichtung nach Anspruch 2, dadurch gekennzeichnet, daß die Sendeelemente Mittel umfaßen, um ein Trägersignal zu erzeugen, das durch ein zweites Signal mit variabler Phase als Funktion der zu übertragenden Daten frequenzmoduliert ist und Mittel (17) umfaßen, um ein Infrarotlichtbündel mit dem Trägersignal amplitudenzumodulieren.

4. Vorrichtung nach Anspruch 3, dadurch gekennzeichnet, daß die Mittel zur Erzeugung dieses Trägersignals, in Reihe geschaltet, einen Phasenmodulator (15) umfassen, der so ausgelegt ist, daß er die Phase um ein Unterträgersignal bei einer Frequenz (f2) als Funktion der zu übertragenden Signale variieren läßt und ein Frequenzmodulator (16) so ausgebildet ist, daß er die Frequenz (f1) eines Trägersignals als Funktion des Unterträgersignals moduliert.

5. Vorrichtung nach Anspruch 4, dadurch gekennzeichnet, daß der Phasenmodulator (15) mit dem entsprechenden Verarbeitungsorgan (6) vermittels eines Eingangs/Ausgangselementes (4) verbunden ist, das so ausgebildet ist, daß es die Digitalworte in eine Bitfolge umformt.

6. Vorrichtung nach Anspruch 2, dadurch gekennzeichnet, daß jedes Empfangselement, in Reihe geschaltet, Mittel (18, 19) umfaßt, um die Infrarotstrahlen zu empfangen und in diesen Modulationssignale zu ermitteln, einen Frequenzdemodulator (20), um das Signal mit variabler Phase zu ermitteln, einen Phasendemodulator, um Bitfolgen wiederherzustellen, welche die Phase des zweiten Unterträgersignals mit einer Frequenz (f2) modulieren und in den Bitfolgen den Beginn jedes der übertragenen Digitalworte ermittelt, wobei das Ermittlungssignal auf das entsprechende Verarbeitungsorgan übertragen wird.

7. Vorrichtung nach Anspruch 6, dadurch gekennzeichnet, daß, der Phasendemodulator (20) mit dem entsprechenden Verarbeitungsorgan über ein Eingangs/Ausgangselement (4) verbunden ist, das so ausgebildet ist, daß es die übertragenen Digitalworte ausgehend von den empfangenen Bitfolgen auf die Steuerung des entsprechenden Verarbeitungsorgans hin wiederherstellt.

8. Vorrichtung nach Anspruch 2, dadurch gekennzeichnet, daß das Verarbeitungsorgan (6) der ersten Steueranordnung einen Mikrorechner (6–8) umfaßt, der einer Steuertastatur (9) und einem Sichtbarmachungselement (10) zugeordnet ist, wobei der Mikrorechner mit Eingängen (13) zur Verbindung mit Peripheriegeräten versehen ist.

# FIG.1

# FIG.2

**FIG.4**

2  18  19  20  21  6

4

1

**FIG.3**

17  16  15  3  6